# EUROPEAN PATENT APPLICATION

(11) **EP 4 752 716 A1**
(43) Date of publication of application: **03.06.2026**
(21) Application number: 24905555.9
(22) Date of filing: 05.08.2024
(51) Int. Cl.: G06F 9/451

(54) **INTERFACE DISPLAY METHOD, ELECTRONIC DEVICE, AND STORAGE MEDIUM**

(30) Priority: 22.12.2023 CN 202311814473
(71) Applicant: Honor Device Co., Ltd., Shenzhen, Guangdong 518040 (CN)
(72) Inventor: MA, Shengbo, Shenzhen, Guangdong 518040 (CN)
(74) Representative: Isarpatent
(86) International application number: PCT/CN2024/109930
(87) International publication number: WO 2025/130059

(57) **Abstract**

This application provides an interface display method, an electronic device, and a storage medium, and relates to the field of terminal technologies. The method includes: determining that a to-be-drawn first drawing node in a to-be-displayed target interface and a plurality of mutually unoccluded child nodes thereof are all drawing nodes to be processed through background blur; if it is determined that a stored background picture exists, and the background picture is a picture obtained after blur processing performed based on blur parameters respectively corresponding to the first drawing node and the plurality of child nodes, cropping background regions respectively corresponding to locations of the first drawing node and the plurality of child nodes from the background picture, to obtain a blurred picture; and after the blurred picture is drawn to corresponding locations of the first drawing node and the plurality of child nodes, drawing content of the first drawing node and the plurality of child nodes on a layer above the blurred picture, to generate and display the target interface.

## Description

This application claims priority to Chinese Patent Application No. 202311814473.0, filed with the China National Intellectual Property Administration on December 22, 2023 and entitled "INTERFACE DISPLAY METHOD, ELECTRONIC DEVICE, AND STORAGE MEDIUM", which is incorporated herein by reference in its entirety.

### TECHNICAL FIELD

Embodiments of this application relate to the field of terminal technologies, and in particular, to an interface display method, an electronic device, and a storage medium.

### BACKGROUND

To achieve a good interface display effect, an electronic device performs blur processing on a background of an interface in a notification panel scenario, a status bar scenario, a pop-up window scenario, a card scenario, or the like, to improve sense of quality of a display interface, highlight design beauty of the interface, and improve user experience.

In a related technology, a system usually performs blur processing on a background of each interface control in a to-be-displayed interface by using a real-time background blur method. However, when display content in the to-be-displayed interface is updated but the interface control in the to-be-displayed interface is not updated, the system needs to separately obtain a background picture corresponding to the background of each interface control, and separately perform blur processing on the obtained background picture. In this case, performance and power consumption of a device are affected to some extent.

### SUMMARY

Embodiments of this application provide an interface display method, an electronic device, and a storage medium, to simultaneously perform background blur on a drawing node and a plurality of mutually unoccluded child nodes thereof that are to be subjected to background blur, thereby improving efficiency of background blur of a target interface, and reducing power consumption of a device.

To achieve the foregoing objective, the following technical solutions are used in embodiments of this application.

According to a first aspect, an interface display method is provided. The method includes:
determining a to-be-drawn first drawing node in a to-be-displayed target interface as a target drawing node, where the target drawing node means that a drawing node and a plurality of mutually unoccluded child nodes of the drawing node are all drawing nodes to be processed through background blur; if it is determined that a stored background picture exists, and the background picture is a picture obtained after blur processing performed based on blur parameters respectively corresponding to the first drawing node and the plurality of child nodes, cropping background regions respectively corresponding to locations of the first drawing node and the plurality of child nodes from the background picture, to obtain a blurred picture; after the blurred picture is drawn to corresponding locations of the first drawing node and the plurality of child nodes, drawing content of the first drawing node and the plurality of child nodes on a layer above the blurred picture, to generate the target interface; and displaying the target interface, where the target interface includes an interface control corresponding to the first drawing node and the plurality of child nodes, and a background region of the interface control is the blurred picture.

It may be understood that an electronic device simultaneously performs background blur on the first drawing node and the plurality of mutually unoccluded child nodes of the first drawing node to obtain the blurred picture, thereby improving efficiency of background blur, and reducing power consumption of the device.

Because the electronic device can store the background picture obtained after blur processing, a background region corresponding to a location of each target drawing node may be directly cropped from the background picture obtained after blur processing, without separately obtaining the background picture when the target drawing node is drawn and separately performing blur processing on the obtained background picture, to save power of a system by reducing quantities of times of obtaining and performing blur processing on the background picture.

In a possible implementation of the first aspect, the drawing content of the first drawing node and the plurality of child nodes on a layer above the blurred picture, to generate the target interface includes:
determining whether the first drawing node and the plurality of child nodes are all off-screen render nodes; and
if the first drawing node and the plurality of child nodes are all off-screen render nodes, drawing an off-screen picture on the layer above the blurred picture to generate the target interface, where the off-screen picture is obtained by performing off-screen drawing on the content of the first drawing node and the child nodes in advance, and the off-screen picture is drawn when the target interface is drawn for the first time or when the content of the off-screen render nodes in the target interface are updated.

It may be understood that when the first drawing node and the plurality of mutually unoccluded child nodes of the first drawing node are all off-screen render nodes, off-screen drawing is performed on the content of the first drawing node and the plurality of child nodes to obtain the off-screen picture. When the first drawing node is drawn, it is determined that the first drawing node and the plurality of child nodes thereof are nodes to be subjected to background blur. After cropping the blurred picture corresponding to the locations of the first drawing node and the plurality of child nodes thereof from the background picture, the electronic device draws the blurred picture on a canvas, and draws the off-screen picture on the layer above the blurred picture, to generate the target interface.

It can be learned that when the first drawing node and the plurality of child nodes thereof are both off-screen render nodes and nodes to be subjected to background blur, and when the first drawing node and the plurality of child nodes are drawn, the off-screen picture is obtained to replace an original drawing instruction, and background blur is simultaneously performed on the first drawing node and the plurality of child nodes thereof, thereby improving efficiency of node drawing, improving efficiency of background blur, and reducing power consumption of the device.

It should be further explained that only when the off-screen render nodes are drawn for the first time or off-screen render content is updated, the electronic device draws the off-screen picture corresponding to the off-screen render nodes on an off-screen canvas, without drawing the content of the off-screen render nodes each time the target interface is drawn, thereby improving drawing efficiency of the target interface.

In another possible implementation of the first aspect, before the drawing an off-screen picture on the layer above the blurred picture to generate the target interface, the method further includes:
traversing to the first drawing node of the target interface, and determining, based on whether property information of the first drawing node includes an off-screen render identifier, whether the first drawing node and the plurality of child nodes are off-screen render nodes; and if the first drawing node and the plurality of child nodes are off-screen render nodes, drawing the content of the first drawing node and the plurality of child nodes on a corresponding off-screen canvas, to generate a corresponding off-screen picture.

That is, if off-screen rendering needs to be performed on a specific drawing node, property information of the drawing node stores an off-screen render identifier. The electronic device may traverse each drawing node of the target interface, and determine, based on whether property information of the drawing node stores an off-screen render identifier, whether to perform off-screen rendering on the drawing node. Therefore, the electronic device performs off-screen rendering on the first drawing node and the child nodes thereof to generate the off-screen picture. When the first drawing node and the child nodes thereof are drawn, there is no need to invoke the drawing instruction, thereby reducing power consumption of node drawing.

In another possible implementation of the first aspect, the interface display method may further include:
determining whether the first drawing node and the plurality of child nodes are drawing nodes to be processed through background blur; and if only the first drawing node is a drawing node to be processed through background blur, storing location information of the first drawing node in the property information of the drawing node; or if the first drawing node and the plurality of child nodes are all drawing nodes to be processed through background blur, storing location information of the first drawing node and the plurality of child nodes in the property information of the target drawing node.

That the blurred picture is drawn to corresponding locations of the first drawing node and the plurality of child nodes includes:
drawing the blurred picture to the corresponding locations of the first drawing node and the plurality of child nodes based on the location information of the first drawing node and the plurality of child nodes that is stored in the property information.

In a process of drawing the off-screen render nodes, the location information of the first drawing node to be subjected to background blur is stored in the property information of the drawing node or the location information of the first drawing node and the child nodes thereof that are to be processed through background blur is stored in the property information of the first drawing node. In a process of drawing the target interface, background blur is simultaneously performed on the first drawing node and the plurality of child nodes thereof when the first drawing node is traversed, thereby improving efficiency of background blur.

In another possible implementation of the first aspect, the property information of the first drawing node stores the blur parameters respectively corresponding to the first drawing node and the plurality of child nodes, the blur parameter includes a blur radius, and the interface display method may further include:
if it is determined that the stored background picture exists, and blur processing is not performed on the background picture based on the blur parameters respectively corresponding to the first drawing node and the plurality of child nodes, generating corresponding blur filters based on blur radiuses respectively corresponding to the target drawing node and the plurality of child nodes, and performing blur processing on the locations corresponding to the first drawing node and the plurality of child nodes in the background picture by using the blur filters respectively corresponding to the target drawing node and the plurality of child nodes, to obtain the background picture obtained after blur processing; and cropping the background regions respectively corresponding to the location information of the first drawing node and the plurality of child nodes from the background picture obtained after blur processing, to obtain the blurred picture.

The blur radius is used to characterize a blur degree of the background picture. That is, a larger blur radius indicates a more blurred background picture; and a smaller blur radius indicates a clearer background picture.

It may be understood that the electronic device determines that blur processing is not performed on the stored background picture, and the electronic device uses the blur radiuses corresponding to the first drawing node and the plurality of child nodes to separately perform blur processing on corresponding regions in the background picture.

In another possible implementation of the first aspect, the location information of the child nodes is locations of the child nodes relative to the first drawing node.

In another possible implementation of the first aspect, the method is applied to an electronic device, the electronic device includes an application layer, a framework layer, and a system library, the application layer includes a target application, and the method further includes:

After the electronic device obtains the blur parameter and the off-screen render identifier of the first drawing node based on the target application at the application layer, the target application sends the blur parameter and the off-screen render identifier to a corresponding first drawing node at the framework layer; the first drawing node at the framework layer sends the blur parameter and the off-screen render identifier to a corresponding first drawing node in the system library; and after receiving the blur parameter and the off-screen render identifier, the first drawing node in the system library stores the blur parameter and the off-screen render identifier in corresponding property information.

It may be understood that after a blur parameter and an off-screen render identifier of a drawing node that are obtained by the electronic device based on the target application at the application layer are sent to a drawing node corresponding to each interface control, and the blur parameter and the off-screen render identifier of the drawing node are stored as parameters in property information corresponding to the drawing node, in a process of drawing the first drawing node, the electronic device determines, based on the blur parameter and the off-screen render identifier of the first drawing node that are stored in the property information of the first drawing node, that the first drawing node is a node that is obtained after off-screen rendering and that is to be processed through background blur, and the electronic device directly crops the background region corresponding to the location of the first drawing node from the background picture, uses the blurred picture as a background of the region of the first drawing node, and directly draws the off-screen picture on the layer above the blurred picture. Because the electronic device can store the off-screen picture obtained through off-screen drawing, the off-screen picture can be directly obtained without repeatedly drawing the content of the first drawing node and the child nodes thereof. In this way, power of the system is saved by reducing a quantity of times of drawing the off-screen render nodes.

In addition, after a picture identifier obtained by the electronic device based on the target application at the application layer is sent to the drawing node corresponding to each interface control and the icon identifier is stored as a parameter in the property information corresponding to the drawing node, the electronic device obtains, after determining the target drawing node, the background picture from a location indicated by the icon identifier stored in the property information of the target drawing node, and the electronic device directly crops the background region corresponding to the location of the target drawing node from the background picture and uses a target picture as a background of a region corresponding to a control of the target drawing node. Because the electronic device can store the background picture obtained after blur processing, the background region corresponding to the location of each target drawing node may be directly cropped from the background picture obtained after blur processing, without separately obtaining the background picture when the target drawing node is drawn and performing blur processing on the obtained background picture, to save power of the system by reducing the quantities of times of obtaining and performing blur processing on the background picture.

According to a second aspect, this application provides an electronic device, including an application layer, a framework layer, and a system library. The application layer includes a target application. After the electronic device obtains a blur parameter and an off-screen render identifier of a first drawing node based on the target application at the application layer, the target application sends the blur parameter and the off-screen render identifier to a corresponding first drawing node at the framework layer, the first drawing node at the framework layer sends the blur parameter and the off-screen render identifier to a corresponding first drawing node in the system library, and after receiving the blur parameter and the off-screen render identifier, the first drawing node in the system library stores the blur parameter and the off-screen render identifier in corresponding property information.

According to a third aspect, this application provides an electronic device, including one or more processors and a memory. The memory stores one or more computer programs, and the one or more computer programs include instructions. When the instructions are executed by the electronic device, the electronic device is enabled to perform the interface display method according to any item in the first aspect.

According to a fourth aspect, this application provides a computer-readable storage medium. The computer-readable storage medium stores instructions. When the instructions are run on an electronic device, the electronic device is enabled to perform the interface display method according to any item in the first aspect.

According to a fifth aspect, this application provides a computer program product. The computer program product includes computer instructions. When the computer instructions are run on an electronic device, the electronic device is enabled to perform the interface display method according to any item in the first aspect.

It may be understood that the electronic device according to the second aspect and the third aspect, the computer storage medium according to the fourth aspect, and the computer program product according to the fifth aspect are all used to perform the foregoing corresponding method. Therefore, for beneficial effects that can be achieved, refer to beneficial effects in the foregoing corresponding method. Details are not described herein again.

### BRIEF DESCRIPTION OF DRAWINGS

FIG. 1 is an example diagram of a drawing interface in a related technology;
FIG. 2 is a schematic diagram of a structure of an electronic device according to an embodiment of this application;
FIG. 3 is a diagram of a software structure of an electronic device according to an embodiment of this application;
FIG. 4 is a schematic diagram of a structure of a render tree according to an embodiment of this application;
FIG. 5A, FIG. 5B, and FIG. 5C are example diagrams of interfaces according to an embodiment of this application;
FIG. 6 is an example diagram of coordinate information of a drawing node in a screen coordinate system according to an embodiment of this application;
FIG. 7A and FIG. 7B are a schematic flowchart of an interface display method according to an embodiment of this application;
FIG. 8 is an example diagram of off-screen rendering according to an embodiment of this application;
FIG. 9A, FIG. 9B, FIG. 9C, and FIG. 9D are example diagrams of interface drawing according to an embodiment of this application;
FIG. 10A, FIG. 10B, and FIG. 10C are example diagrams of another interface drawing according to an embodiment of this application;
FIG. 11 is an example diagram of background blur according to an embodiment of this application; and
FIG. 12A, FIG. 12B, FIG. 12C, and FIG. 12D are example diagrams of another interface drawing according to an embodiment of this application.

### DESCRIPTION OF EMBODIMENTS

The following describes technical solutions in embodiments of this application with reference to the accompanying drawings in the embodiments of this application. In the descriptions of embodiments of this application, unless otherwise specified, "/" indicates "or". For example, A/B may represent A or B. In this specification, "and/or" is merely an association relationship for describing associated objects, and indicates that three relationships may exist. For example, A and/or B may indicate the following three cases: Only A exists, both A and B exist, and only B exists.

In the following, the terms "first" and "second" are used merely for the purpose of description, and shall not be construed as indicating or implying relative importance or implicitly indicating a quantity of indicated technical features. Therefore, a feature limited by "first" or "second" may explicitly or implicitly include one or more features. In the description of the embodiments of this application, unless otherwise stated, "a plurality of" means two or more.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the words such as "example" or "for example" is intended to present a related concept in a specific manner.

In a related technology, to achieve a good interface display effect, in some scenarios, an electronic device performs blur processing on a background region of an interface control displayed in an interface. The interface control corresponds to a drawing node. In a process in which the electronic device performs blur processing on the background region of the drawing node, the electronic device usually traverses drawing nodes corresponding to each interface control, and successively obtains background pictures corresponding to the drawing nodes. After blur processing is performed on the obtained background pictures, blur processing is performed on background regions of the drawing nodes based on the background pictures obtained after blur processing.

When a to-be-displayed interface is drawn in a scenario in which content displayed in the interface is updated but a control in the interface is not updated, the control in the interface still needs to be redrawn. When a quantity of controls in the interface that are drawn by the electronic device is large, the electronic device executes many drawing instructions, which affects performance and power consumption of the device.

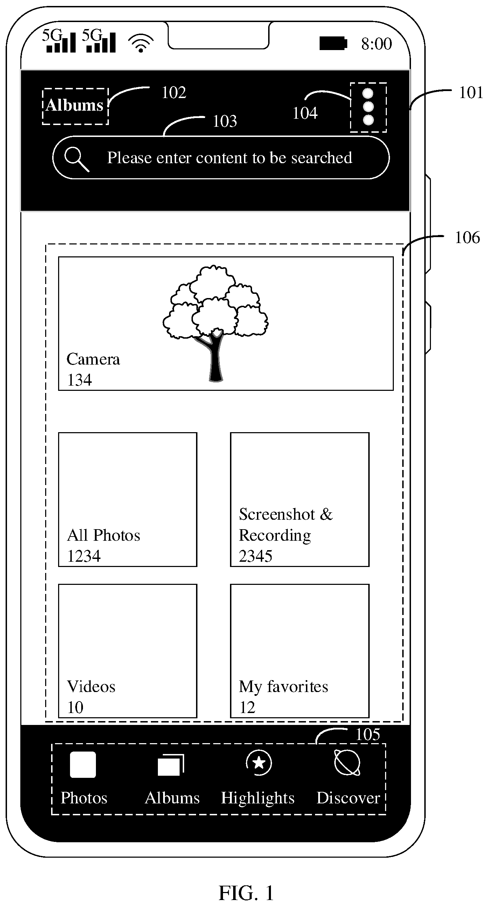

For example, as shown in FIG. 1, when the electronic device draws an interface of a Gallery application and content of a region 106 is updated, the electronic device needs to redraw the interface. In this case, the electronic device needs to separately perform background blur on background regions of a control 102, a search toolbar 103, and a control 104 in a region 101, and separately draw content of the control 102, the search toolbar 103, and the control 104; and the electronic device further needs to separately perform background blur on background regions of a "Photo" control, an "Album" control, a "Highlights" control, and a "Discover" control in a region 105, and separately draw content of the four controls.

An embodiment of this application provides an interface display method. In this method, an electronic device determines a to-be-drawn first drawing node in a to-be-displayed target interface as a target drawing node, and if it is determined that a stored background picture exists, and the background picture is a picture obtained after blur processing performed based on blur parameters respectively corresponding to the first drawing node and a plurality of child nodes, the electronic device crops background regions respectively corresponding to the first drawing node and the plurality of child nodes from the background picture, to obtain a blurred picture; the electronic device draws the blurred picture to corresponding locations of the first drawing node and the plurality of child nodes, and draws content of the first drawing node and the plurality of child nodes on a layer above the blurred picture, to generate the target interface; and the electronic device displays the target interface, where the target interface includes an interface control corresponding to the first drawing node and the plurality of child nodes, and a background region of the interface control is the blurred picture.

The target drawing node means that a drawing node and a plurality of mutually unoccluded child nodes of the drawing node are all drawing nodes to be processed through background blur.

Therefore, the electronic device simultaneously performs background blur on the first drawing node and the plurality of mutually unoccluded child nodes of the first drawing node to obtain the blurred picture, thereby improving efficiency of background blur, and reducing power consumption of the device.

For example, the interface display method provided in this embodiment of this application may be applied to an electronic device having a display screen, such as a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, an intelligent vehicle, or an intelligent sound. This is not limited in this embodiment of this application.

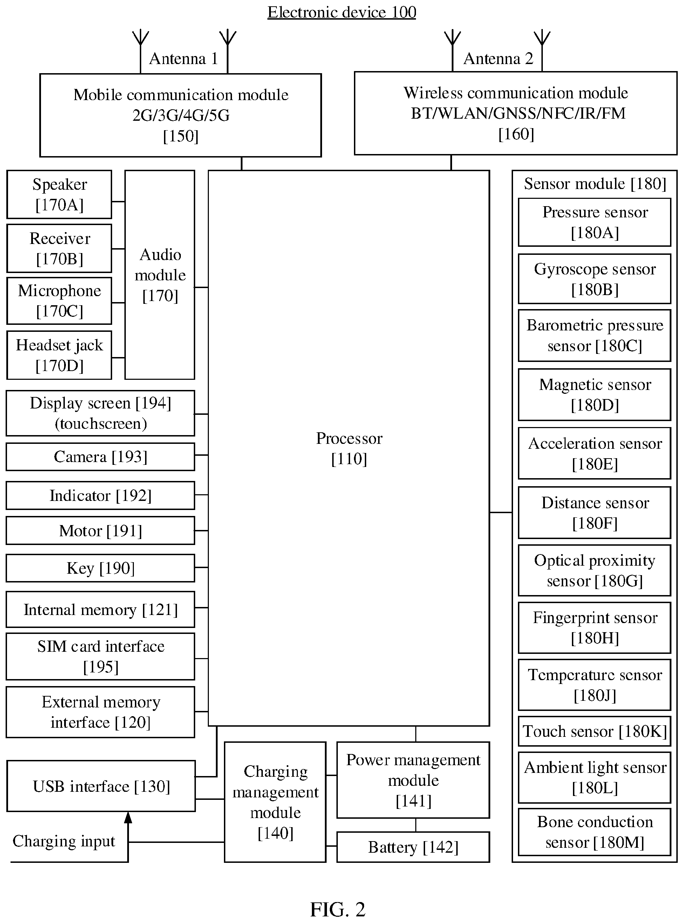

As shown in FIG. 2, FIG. 2 is a schematic diagram of a structure of an electronic device according to an embodiment of this application.

An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application constitutes no specific limitation on the electronic device 100. In some other embodiments of this application, the electronic device 100 may include more or fewer components than those shown in the figure, some components may be combined, some components may be split, or there may be different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interfaces may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the embodiment, or a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a solution applied to the electronic device 100 for wireless communication, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more devices integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

**In** some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flex light-emitting diode (flex light-emitting diode, FLED), a Miniled, a MicroLed, a Micro-oLed, a quantum dot light-emitting diode (quantum dot light-emitting diode, QLED), or the like. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of encoding formats, such as moving picture experts group (moving picture experts group, MPEG)1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, voice recognition, and text understanding, may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function, for example, to store files such as music and videos in the external memory card.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing or sound recording, by using the audio module 170, the speaker 170A, the receiver 170B, the microphone 170C, the headset jack 170D, the application processor, and the like.

The key 190 includes a power-on/off key, a volume key, or the like. The key 190 may be a mechanical key, or may be a touch key. The electronic device 100 may receive a key input and generate a key signal input related to user settings and function control of the electronic device 100.

The motor 191 may generate a vibration prompt.

The indicator 192 may be an indicator light, may be configured to indicate a charging status or a power change, and may be further configured to indicate a message, a missed incoming call, a notification, and the like.

The SIM card interface 195 is configured to be connected to a SIM card.

A software system of the electronic device may use a layered architecture, an event-driven architecture, a microkernel architecture, a microservice architecture, or a cloud architecture. In the embodiments of this application, an Android system with a layered architecture is used as an example to describe a software structure of the electronic device.

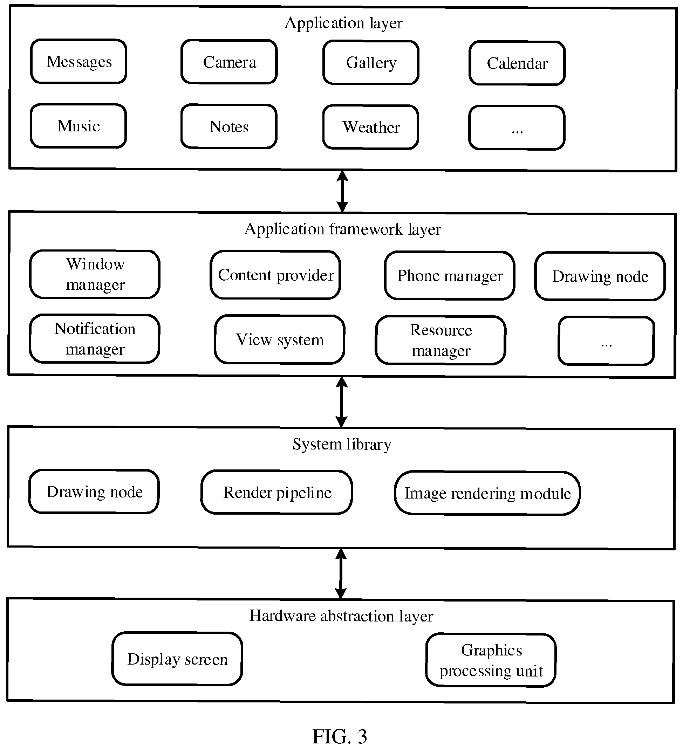

FIG. 3 is a diagram of a software structure of an electronic device according to an embodiment of this application.

It may be understood that, in a layered architecture, software is divided into several layers, and each layer has a clear role and task. Layers communicate with each other through a software interface. In some embodiments, the system may include an application layer (referred to as an application layer for short), an application framework layer (referred to as a framework layer for short), a system library, and a hardware abstraction layer.

The application layer may include a series of application packages.

As shown in FIG. 3, the application packages may include system applications. The system application is an application set in the electronic device before the electronic device is delivered from a factory. For example, the system applications may include programs such as Camera, Gallery, Calendar, Music, Messages, Notes, and Weather.

The application packages may further include third-party applications, and the third-party applications refer to applications installed by a user after installation packages are downloaded from an application store (or an application market), for example, a map application, a take-out application, a reading application (for example, an E-book), a social application, and a travel application.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, a drawing node (RenderNode), and the like.

The window manager is configured to manage a window program. The window manager may obtain a size of a display screen, determine whether there is a status bar, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. A display interface may include one or more views. For example, a display interface including an SMS message notification icon may include a view for displaying a text and a view for displaying a picture.

The phone manager is configured to provide a communication function of the electronic device, for example, call status management (including answering, hanging up, and the like).

The resource manager provides various resources for an application, for example, a localized string, an icon, a picture, a layout file, and a video file.

The notification manager enables an application to display notification information in the status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in a top status bar of the system in a form of a graph or scroll bar text, for example, a notification of an application running in the background or a notification that appears on a screen in a form of a dialog window. For example, prompt text information is presented in the status bar, an alert sound is given, the mobile phone vibrates, and an indicator light flashes.

The system library may include a drawing node, a render pipeline (pipeline), an image rendering module, and the like.

The drawing node is used to characterize each element in an interface.

In the embodiments of this application, an interface displayed by the electronic device may be implemented by using a render tree (RenderTree). The tree structure includes several drawing nodes, and each drawing node includes corresponding control image drawing logic. Each drawing node may be set with various properties. For example, the drawing node may be set with a background effect property to add a background effect to background content included in a control image corresponding to the node.

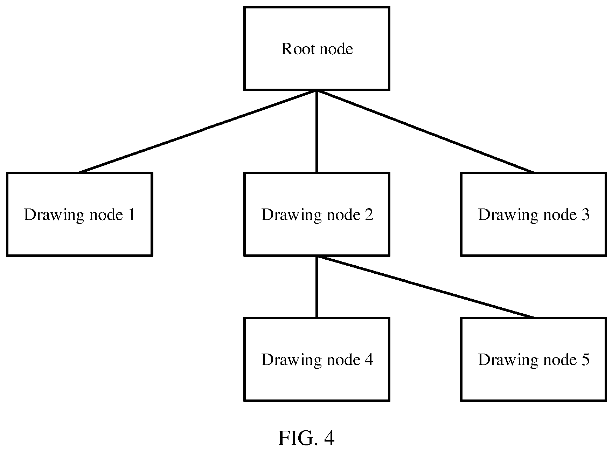

For example, FIG. 4 is a schematic diagram of a structure of a render tree according to an embodiment of this application. As shown in FIG. 4, it is assumed that an interface A may be implemented by using a drawing node 1 to a drawing node 5.

The render pipeline is a channel used for data transmission.

The image rendering module provides a capability of drawing a picture and drawing a shape.

In the embodiments of this application, the hardware abstraction layer may include a graphics processing unit and a display screen.

In the embodiments of this application, when applications perform interface layout, the application layer may obtain a background picture and invoke a background blur capability to set blur parameters and off-screen render identifiers of drawing nodes in a to-be-drawn target interface, and send the blur parameters and the off-screen render identifiers of the drawing nodes and a corresponding picture identifier of the background picture to the framework layer. The blur parameter includes but is not limited to a blur radius and a shape feature (for example, a rounded corner rectangle, a circle, or a diamond shape). The blur radius is used to characterize a blur degree of a picture, and a value of the blur radius is a value for extension outward from a specific pixel.

The background picture refers to a picture used to blur a background region of a drawing node. The picture identifier of the background picture carries a storage address of the background picture.

The off-screen render identifier is used to characterize whether off-screen drawing needs to be performed on the drawing node. For example, if the off-screen render identifier is 1, it represents that off-screen rendering needs to be performed on the drawing node and child nodes thereof; or if the off-screen render identifier is 0, it represents that there is no need to perform off-screen rendering on the drawing node and child nodes thereof.

In this embodiment of this application, the background picture obtained by the application layer may be a clear picture on which blur processing is not performed, or may be a picture obtained after blur processing. This is not limited herein. The shape feature refers to a shape obtained after the background picture is processed.

After receiving the blur parameters and the background picture that are sent by the application layer, the framework layer sends the blur parameters and the background picture to the system library through a Java native interface (Java native interface, JNI).

After receiving the blur parameters and the off-screen render identifiers of the drawing nodes and the picture identifier of the background picture that are sent by the framework layer, the system library stores the blur parameters, the off-screen render identifiers, and the picture identifier as parameters in property information of the drawing nodes. The picture identifier is used to indicate a storage location of the background picture.

In a possible case of this embodiment of this application, the system library determines that the background picture indicated by the picture identifier stored in the property information of the drawing nodes is a picture processed based on the blur parameters, and the system library may perform blur processing on background regions of the drawing nodes based on the background picture.

The following describes an interface display method according to an embodiment of this application by using a scenario, as an example, in which the foregoing application is a Gallery application and a target interface is displayed in a process of starting the Gallery application by a mobile phone.

In this embodiment of this application, in the process of starting the Gallery application by the mobile phone, when the Gallery application lays out a to-be-displayed target interface of the Gallery application based on an application layout file, the Gallery application may generate blur parameters respectively corresponding to various interface controls based on display effect designs for the interface controls in the target interface in the application layout file. The interface control refers to a control that is to be processed through background blur and whose background picture resource changes infrequently.

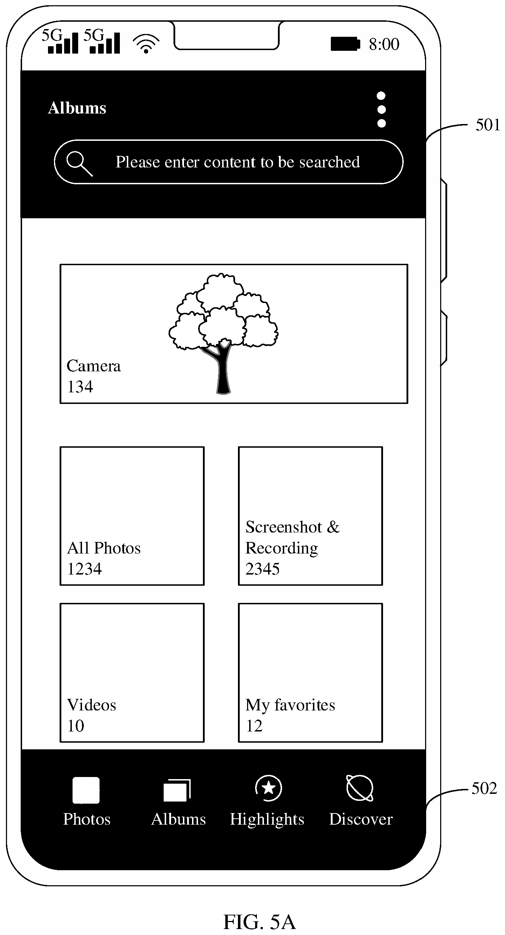

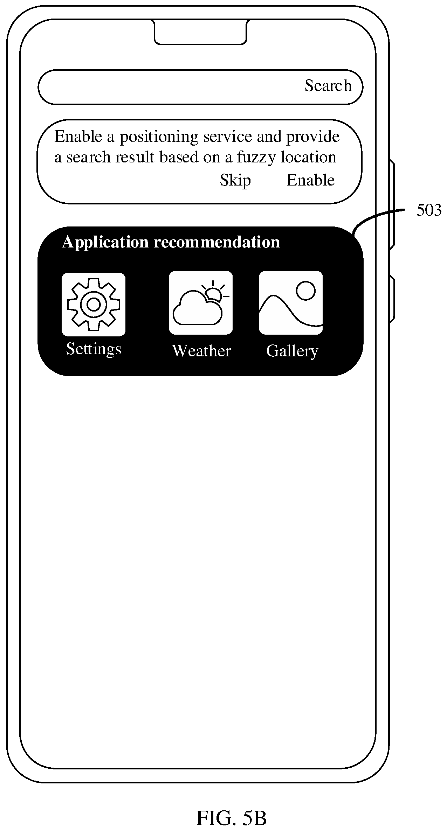

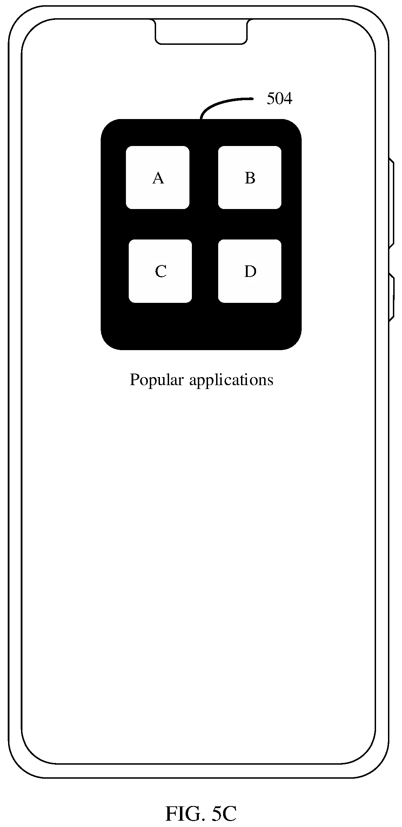

For example, as shown in FIG. 5A, FIG. 5B, and FIG. 5C, the interface controls may be some controls in the Gallery application, for example, the interface controls may be a control 501 and a control 502 shown in FIG. 5A. The interface controls may alternatively be some controls in a notification panel, for example, a control 503 shown in FIG. 5B, or may be controls displayed in a home screen, for example, a control 504 shown in FIG. 5C.

The application layout file of the Gallery application records code logic of drawing nodes corresponding to the controls, an association relationship between the drawing nodes corresponding to the controls (for example, a parent-child relationship), an interface control to be processed through background blur, timing for performing blur processing on the interface control, and the like. The timing for performing blur processing on the interface control may be a moment at which the interface control is displayed on the display screen or a moment at which the mobile phone detects that the interface control slides on the home screen. The timing for performing blur processing on the interface control is not limited herein.

It should be explained that, in this embodiment of this application, when the Gallery application lays out the display effects for the to-be-displayed target interface, a specific application layout file is not limited, and may be set according to a practical application requirement.

In this embodiment of this application, the Gallery application may generate the blur parameters corresponding to the interface controls based on the display effect designs for the interface controls in the application layout file, and store the blur parameters as the property information of the drawing nodes corresponding to the interface controls in structural bodies of the drawing nodes.

In an embodiment, the Gallery application may set at least one of a transverse blur radius, a longitudinal blur radius, saturation, color value layer information, or the like based on a display effect design for an interface control to be subjected to blur processing in the application layout file, then the Gallery application generates a blur parameter corresponding to the interface control based on at least one of the transverse blur radius, the longitudinal blur radius, the saturation, the color value layer information, or the like. After generating the blur parameter corresponding to the interface control, the Gallery application may invoke an interface to send the blur parameter to a drawing node corresponding to the interface control at the framework layer. For example, the Gallery application may send the blur parameter as an input parameter of a setHnBlurParameters interface to the drawing node corresponding to the interface control at the framework layer. After receiving the blur parameter, the drawing node corresponding to the interface control at the framework layer sends the blur parameter to a drawing node corresponding to the same control in the system library through the JNI interface. Then, the drawing node in the system library stores the blur parameter as property information of a drawing node corresponding to the interface control in a structural body of the drawing node. The drawing node corresponding to the interface control in the system library and the drawing node corresponding to the interface control at the framework layer are different manifestations of the drawing node at different layers of a system software architecture. That is, the drawing node in the system library and the drawing node at the framework layer point to content of a same control.

In another embodiment, the Gallery application may alternatively set, based on a display effect design for an interface control that does not require blur processing in the application layout file, parameters such as saturation or color value layer information for the interface control that does not require blur processing. Then, the Gallery application generates, based on the parameters such as saturation or color value layer information, a blur parameter of the interface control that does not require blur processing. Similarly, the Gallery application stores, in a structural body of a drawing node corresponding to the control in the system library, the blur parameter of the interface control that does not require blur processing. For a specific storage process, refer to the foregoing storage process of the blur parameter of the target interface control. Details are not described herein again.

In still another embodiment, the Gallery application may alternatively determine, based on the display effect designs for the interface controls in the application layout file, whether off-screen rendering needs to be performed on the interface controls. Off-screen rendering refers to creating a new buffer outside a current screen buffer to render an interface control corresponding to a drawing node. That is, a new canvas for off-screen rendering is created. For example, it is assumed that an off-screen render identifier is 1, and it represents that off-screen rendering needs to be performed on the drawing node and child nodes thereof; or it is assumed that an off-screen render identifier is 0, and it represents that there is no need to perform off-screen rendering on the drawing node and child nodes thereof. Similarly, the Gallery application stores the off-screen render identifier corresponding to the drawing node in a structural body of a drawing node corresponding to the interface control in the system library. For a specific storage process, refer to the foregoing storage process of the blur parameter of the interface control. Details are not described herein again.

It should be explained that setting the off-screen render identifier to 0 or 1 is merely used as an example for description. This is not limited in this embodiment of this application. For example, the Gallery application may alternatively set the off-screen render identifier to TRUE, and it represents that off-screen rendering needs to be performed on the drawing node and the child nodes thereof; or the Gallery application sets the off-screen render identifier to FALSE, and it represents that there is no need to perform off-screen rendering on the drawing node and the child nodes thereof.

In this embodiment of this application, after the drawing node in the system library receives the blur parameter, the image rendering module in the system library may generate a blur filter based on a blur radius in the blur parameter, and store the generated blur filter and the blur parameter as parameters in the property information of the drawing node. The blur filter is used to perform blur processing on the background picture in the storage address carried by the picture identifier in the property information of the drawing node.

Optionally, the image rendering module may generate the blur filter by using an image blur algorithm (for example, a Gaussian blur algorithm, a Kawase blur algorithm, or a radial blur algorithm) based on a transverse blur radius and a longitudinal blur radius. For example, the image rendering module generates a Gaussian blur filter by using the Gaussian blur algorithm based on the blur radius. A working principle of the Gaussian blur filter is as follows: Each pixel in a picture is used as a center, an RGB component of the pixel is replaced with an RGB component obtained after weighted average of RGB components of surrounding pixels, and the pixel is redrawn, to obtain a Gaussian blur effect.

It should be explained that after the mobile phone obtains, based on the Gallery application, the background picture used for blur processing of a background region of the interface control, the mobile phone may store the picture identifier of the background picture as a parameter in property information of each drawing node. The picture identifier is used to indicate the storage address of the background picture, for example, the picture identifier may carry the storage address of the background picture. Therefore, when a background region of a target drawing node in the target interface of the Gallery application is blurred, the background picture may be directly obtained from the storage location indicated by the picture identifier in property information of the target drawing node, without reobtaining the background picture from the application layer, thereby saving a part of power of the system.

For example, when the target interface of the Gallery application is drawn for the first time, after the Gallery application determines the background picture for the interface controls in the target interface based on the application layout file, the Gallery application may transmit the picture identifier of the background picture as a parameter to the system library. For example, the Gallery application may send the picture identifier as an input parameter of the setHnBlurParameters interface to the drawing node corresponding to the interface control. After receiving the picture identifier, the drawing node of the interface control may send the picture identifier to the drawing node at the framework layer, and after receiving the picture identifier, the drawing node at the framework layer sends the picture identifier to the drawing node in the system library through the JNI. The drawing node in the system library stores the picture identifier as the property information of the drawing node corresponding to the interface control in the structural body of the drawing node in the system library. Therefore, the system library may obtain the background picture from the storage address of the background picture indicated by the picture identifier stored in the property information of the drawing nodes, without obtaining the background picture from the application layer, thereby saving a part of power of the system.

For ease of subsequent description, in this embodiment of this application, a picture used for blur processing of a background of an interface control is named as a background picture. Certainly, naming a picture used as a background as a background picture is merely used as an example for description. This is not limited herein. The background picture obtained by the Gallery application may be a picture obtained after blur processing or a clear picture. This is not limited herein.

In this embodiment of this application, when the Gallery application is started, a main thread of the Gallery application is started with the Gallery application. The main thread may invoke a render thread (Render Thread) to draw and render the background picture corresponding to the interface control, to perform blur processing on the background of the interface control. The Render Thread is a render thread configured to share a drawing task with the main thread, to reduce a burden on the main thread. Herein, the main thread may invoke the Render Thread to determine whether background blur processing needs to be performed on a to-be-drawn interface control, and may further invoke the Render Thread to draw and render the background picture corresponding to the interface control, thereby avoiding render stuttering when the main thread performs a time-consuming operation, and improving render smoothness.

In this embodiment of this application, the main thread and the Render Thread each maintain one piece of application window view information. The main thread and the Render Thread each maintain one piece of application window view information to avoid mutual interference and implement parallelism at the greatest extent, thereby saving startup time of the Gallery application. The application window view information maintained by the Render Thread comes from the main thread. Therefore, when the application window view information maintained by the main thread changes, the changed application window view information needs to be synchronized to the Render Thread. The application window view information may include a display list (Display List) and the property (Property) information of the drawing nodes and the background picture (that is, Bitmap referenced in the Display List) referenced in the display list.

For example, the main thread may invoke a synFrameState function to synchronize the application window information to the Render Thread. For example, the main thread may invoke the synFrameState function to synchronize the property information of the drawing node at the framework layer to the property information of the drawing node in the system library.

The main thread synchronizes the maintained Display List to the Display List maintained by the Render Thread, so that the main thread and the Render Thread can be executed in parallel. This means that when the Render Thread renders a Display List of a current frame of application window, the main thread may prepare a Display List of a next frame of application window. In this way, interface display of an application window is smoother.

In this embodiment of this application, each drawing node may include two properties. For example, the drawing node may include a Stagingproperty property and a property property. A parameter in the Stagingproperty property is a parameter synchronized from the property information of the drawing node at the framework layer. For example, the main thread invokes the synFrameState function to synchronize the property information of the drawing nodes at the framework layer to property information of Stagingproperty properties of corresponding drawing nodes in the system library. The property information of the Stagingproperty property includes but is not limited to an off-screen render identifier, a blur radius of a drawing node, location information of the drawing node, a size of the drawing node, and a shape of the drawing node.

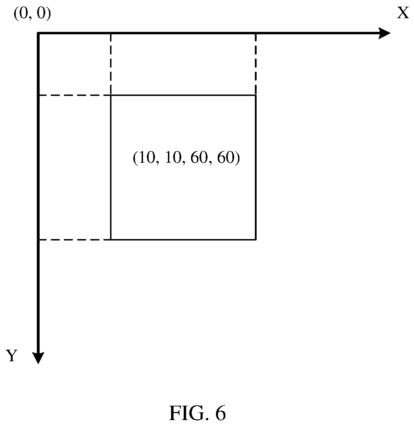

The location information of the drawing node may refer to location information of the drawing node in a screen coordinate system. In this embodiment of this application, the location information of the drawing node may be a coordinate value of the drawing node relative to a screen. The screen coordinate system is a two-dimensional coordinate system established on the screen, and a coordinate origin of the screen coordinate system may be at an upper left corner of the entire screen. The location information of the drawing node in the screen coordinate system may be represented as (StartX, StartY, EndX, EndY), where StartX is calculated from a leftmost edge of the screen, and 0 represents the leftmost edge; StartY is calculated from an uppermost edge of the screen, and 0 represents the uppermost edge; EndX is calculated from the leftmost edge of the screen, and 0 represents the leftmost edge; and EndY is calculated from the uppermost edge of the screen, and 0 represents the uppermost edge. FIG. 6 is an example diagram of coordinate information of a drawing node in a screen coordinate system according to an embodiment of this application. In FIG. 6, a left edge of the drawing node is 10, an upper edge is 10, a right edge is 60, and a lower edge is 60. Therefore, the coordinate information of the drawing node is (10, 10, 60, 60)

To ensure thread security, and prevent the two threads from simultaneously performing an operation on a same property of the drawing node, before the Render Thread draws and renders each frame of background picture, the Render Thread may synchronize the property information of the Stagingproperty property of each drawing node to property information of the property property. When the Render Thread subsequently performs blur processing on the background picture based on the blur parameter, the Render Thread directly invokes the blur parameter included in the property information of the property property.

In a process in which the Render Thread synchronizes the property information of the Stagingproperty property of each drawing node to the property information of the property property, the Render Thread simultaneously synchronizes the blur filter generated in the foregoing process to a corresponding drawing node, so that when the Render Thread subsequently performs blur processing the background picture, the Render Thread can invoke the blur filter to perform blur processing on the background picture, to implement a blur effect.

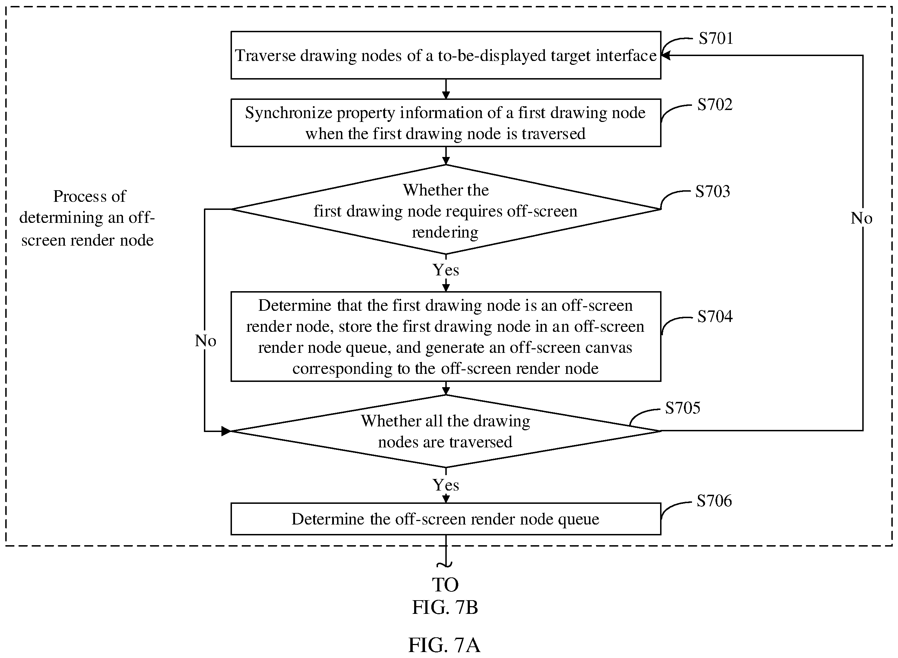

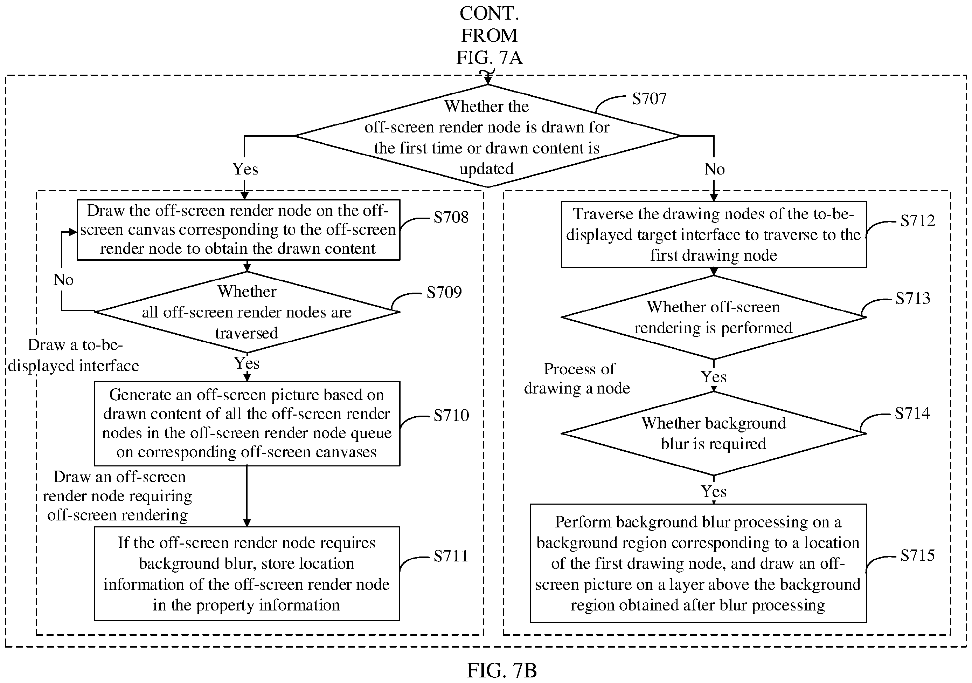

In this embodiment of this application, after a Display List of a window of the Gallery application is constructed, the main thread sends a rendering instruction to the Render Thread. After receiving the rendering instruction from the main thread, the Render Thread draws the interface controls in the to-be-displayed target interface of the Gallery application on a canvas of the display screen. The following describes, with reference to FIG. 7A and FIG. 7B, in detail a process in which the Render Thread draws the interface controls in the target interface. As shown in FIG. 7A and FIG. 7B, the process may include step S701 to step S715.

S701: Traverse drawing nodes of a to-be-displayed target interface.

S702: Synchronize property information of a first drawing node when the first drawing node is traversed.

The first drawing node is any drawing node in the to-be-displayed target interface.

In this embodiment of this application, when the Render Thread draws various interface controls in each frame of target interface, the Render Thread successively traverses each drawing node based on a tree structure of a node tree of the drawing nodes.

For example, when the Render Thread traverses to the first drawing node, the Render Thread may synchronize the property information of the first drawing node at the framework layer to the property information of the same first drawing node in the system library. The first drawing node at the framework layer and the first drawing node in the system library point to content of a same control.

Herein, for a process in which the Render Thread synchronizes the property information of the first drawing node, refer to the process of storing the blur parameter of the interface control in the structural body of the drawing node corresponding to the control in the system library in the foregoing embodiment. Details are not described herein again.

S703: Whether the first drawing node requires off-screen rendering.

In this embodiment of this application, the Render Thread determines, based on an off-screen render identifier stored in the property information of the first drawing node, whether the first drawing node requires off-screen rendering.

If the Render Thread determines, based on the off-screen render identifier stored in the property information of the first drawing node, that the first drawing node does not require off-screen rendering, the Render Thread continues to traverse other drawing nodes of the target interface.

If the Render Thread determines, based on the off-screen render identifier stored in the property information of the first drawing node, that off-screen rendering needs to be performed on the first drawing node, S704 is performed.

For example, if the Render Thread determines that the off-screen render identifier stored in the property information of the first drawing node is a preset identifier 1, the Render Thread determines that the first drawing node requires off-screen rendering, and mark the first drawing node as an off-screen render node. If the Render Thread determines that the off-screen render identifier stored in the property information of the first drawing node is a preset identifier 2, the Render Thread determines that there is no need to perform off-screen rendering on the first drawing node. For example, if the Render Thread determines that the off-screen render identifier stored in the property information of the first drawing node is 1, it represents that off-screen rendering needs to be performed on the drawing node and child nodes thereof. If the Render Thread determines that the off-screen render identifier stored in the property information of the first drawing node is 0, it represents that there is no need to perform off-screen rendering on the drawing node and child nodes thereof.

S704: Determine that the first drawing node is an off-screen render node, store the first drawing node in an off-screen render node queue, and generate an off-screen canvas corresponding to the off-screen render node.

In this embodiment of this application, the Render Thread determines that the first drawing node is an off-screen render node, and the Render Thread may mark the first drawing node, to identify, based on mark information, that the first drawing node is an off-screen render node. Then, the Render Thread stores the first drawing node in the off-screen render node queue, to preferentially draw the drawing node in the off-screen render node queue during subsequent drawing of the target interface. For example, the Render Thread stores the first drawing node in a buffer queue that requires off-screen rendering, and then the Render Thread stores the buffer queue in the property information of the first drawing node.

After the Render Thread determines that the first drawing node is an off-screen render node, the Render Thread generates the off-screen canvas corresponding to the off-screen render node. The off-screen canvas is a canvas used to perform off-screen rendering on the first drawing node and the child nodes thereof.

In a possible case, each off-screen render node corresponds to an off-screen canvas. The Render Thread stores an address pointer of the off-screen canvas in the property information of the first drawing node. When the Render Thread draws content of the first drawing node, the Render Thread obtains, based on the address pointer of the off-screen canvas that is stored in the property information of the first drawing node, the off-screen canvas of the first drawing node from a storage location pointed by the address pointer, to draw the content of the first drawing node on the off-screen canvas.

It should be explained herein that if the first drawing node is an off-screen render node, and a plurality of child nodes of the first drawing node do not occlude each other, the plurality of child nodes of the first drawing node also require off-screen rendering. When off-screen drawing is performed on the first drawing node, the first drawing node and the plurality of mutually unoccluded child nodes thereof are simultaneously drawn on an off-screen canvas to generate a corresponding off-screen picture.

In another possible case, the Render Thread may draw content of all off-screen render nodes on a same off-screen canvas.

S705: Determine whether all the drawing nodes are traversed.

The Render Thread successively traverses each drawing node based on the tree structure of the drawing nodes. If the drawing nodes corresponding to all controls of the to-be-displayed interface are traversed by the Render Thread, the Render Thread may determine all off-screen render nodes in the off-screen render node queue. After the Render Thread traverses all the drawing nodes, the Render Thread may determine all drawing nodes that require background blur and a dirty (dirty) region used for content updating for background blur.

If the Render Thread does not traverse the drawing nodes corresponding to all the controls in the to-be-displayed interface, the Render Thread continues to traverse the drawing nodes, that is, the foregoing steps S701 to S704 are cyclically performed.

S706: Determine the off-screen render node queue.

The off-screen render node queue stores all drawing nodes that require off-screen rendering and that correspond to the to-be-displayed target interface.

S707: Whether the off-screen render node is drawn for the first time or drawn content is updated.

In this embodiment of this application, when the Render Thread draws content of the target interface, the Render Thread first determines whether the off-screen render nodes in the off-screen render node queue are drawn for the first time or there is an off-screen render node whose drawn content is updated.

In a possible case, if the Render Thread determines that content of a specific off-screen render node in the off-screen render node queue is drawn for the first time or drawn content of a specific off-screen render node is updated, the Render Thread draws corresponding content on an off-screen canvas corresponding to the off-screen render node in the off-screen render node queue, that is, performs step S708.

In another possible case, if the Render Thread determines that all the off-screen render nodes in the off-screen render node queue are not drawn for the first time and no drawn content is updated, the Render Thread performs a drawing process of a drawing node from step S712 to step S715.

That is, the Render Thread has drawn content of all the off-screen render nodes in the off-screen render node queue on an off-screen canvas in advance, and generated a corresponding off-screen picture.

It may be understood that the Render Thread determines that all the off-screen render nodes in the off-screen render node queue are not drawn for the first time and to-be-drawn content is not updated, and the Render Thread determines that there is no need to redraw the content of the off-screen render nodes on the off-screen canvas.

S708: Draw the off-screen render node on the off-screen canvas corresponding to the off-screen render node to obtain the drawn content.

In an embodiment, when the Render Thread determines that the off-screen render node is drawn for the first time or the drawn content is updated, the Render Thread draws the content corresponding to the off-screen render node on the off-screen canvas corresponding to the off-screen render node.

In another embodiment, the Render Thread determines that the off-screen render node or the child nodes thereof are drawn for the first time or the drawn content is updated, and the Render Thread draws content corresponding to the off-screen render node and the child nodes thereof on the off-screen canvas corresponding to the off-screen render node.

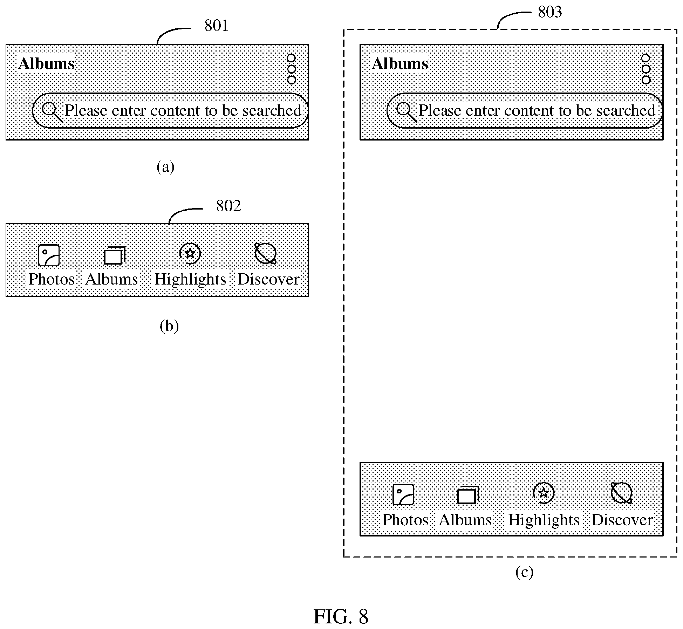

For example, a picture 801 shown in (a) of FIG. 8 is the content of the off-screen render node and the child nodes thereof that is drawn by the Render Thread, and a picture 802 shown in (b) of FIG. 8 is content of another off-screen render node and child nodes thereof that is drawn by the Render Thread.

S709: Whether all off-screen render nodes are traversed.

In an embodiment, if the Render Thread determines that all the off-screen render nodes are traversed, the Render Thread performs step S710.

In another embodiment, if the Render Thread determines that not all the off-screen render nodes are traversed, the Render Thread continues to traverse the off-screen render nodes, and draws content of a traversed off-screen render node on an off-screen canvas corresponding to the off-screen render node.

S710: Generate an off-screen picture based on drawn content of all the off-screen render nodes in the off-screen render node queue on corresponding off-screen canvases.

In a possible case of this embodiment of this application, after the Render Thread draws corresponding content on the off-screen canvases respectively corresponding to the off-screen render nodes, the Render Thread may generate a corresponding off-screen picture based on content drawn on the off-screen canvases corresponding to the off-screen render nodes. That is, content corresponding to each off-screen render node and child nodes thereof is drawn on an off-screen picture corresponding to the off-screen render node. Therefore, when drawn content of a specific off-screen render node in the off-screen render node queue is updated, there is no need to perform off-screen drawing on all the off-screen render nodes again, thereby improving efficiency of interface drawing, and saving power of the system.

In another possible case of this embodiment of this application, after the Render Thread draws corresponding content on the off-screen canvases respectively corresponding to the off-screen render nodes, the Render Thread generates one off-screen picture based on location information of the off-screen render nodes and the content on the off-screen canvases respectively corresponding to all the off-screen render nodes. Therefore, when the interface controls in the to-be-displayed target interface are not updated, the Render Thread performs off-screen drawing on the drawing nodes corresponding to the controls to obtain one off-screen picture, to prevent the controls from being redrawn when content displayed in the to-be-displayed interface is updated, and avoid a problem that drawing efficiency and power consumption of the device are affected due to excessively numerous drawing instructions, thereby improving efficiency of interface drawing.

For example, an off-screen picture 803 shown in (c) of FIG. 8 is generated by the Render Thread based on a picture 801 drawn on an off-screen canvas, a picture 802 drawn on another off-screen canvas, and location information of off-screen render nodes.

In still another case of this embodiment of this application, the Render Thread may further draw the content of all the off-screen render nodes in the off-screen render node queue on a same off-screen canvas. Optionally, the Render Thread may respectively draw the content of all the off-screen render nodes to corresponding locations on the off-screen canvas based on the location information of the off-screen render nodes in the off-screen render node queue, to generate one off-screen picture. Therefore, storage space for storing a plurality of off-screen canvases is saved, and there is no need to fuse content of a plurality of off-screen render nodes, thereby improving efficiency of interface drawing.

S711: If the off-screen render node requires background blur, store location information of the off-screen render node in the property information.

In this embodiment of this application, the Render Thread may determine, based on the property information of the off-screen render node, whether the off-screen render node is a drawing node to be processed through background blur. Optionally, after the Render Thread obtains property information of the off-screen render nodes in the to-be-displayed target interface of the Gallery application, the Render Thread may determine whether the property information of each of the off-screen render nodes includes a blur filter and/or a blur parameter, to determine whether the off-screen render nodes require background blur processing.

In a possible case, if the Render Thread determines that the property information of the off-screen render node does not include a blur filter and/or a blur parameter, the Render Thread determines that there is no need to perform background blur processing on the off-screen render node. In this case, the Render Thread normally draws the off-screen render node on the canvas of the display screen. Then, the Render Thread continues to determine whether a next drawing node is a drawing node to be processed through background blur.

It may be understood that when the Gallery application does not set the blur parameter of the off-screen render node, after the Gallery application transmits the property information of the off-screen render node to the system library by using the framework layer, the property information of the off-screen render node received by the system library does not include the blur parameter, and the system library does not generate the blur filter based on the blur parameter. In this case, the Render Thread determines to normally draws the off-screen render node on the canvas of the display screen.

In another possible case, if the Render Thread determines that the property information of the off-screen render node includes the blur filter and/or the blur parameter, the Render Thread determines that the off-screen render node is a drawing node to be processed through background blur. That is, before determining to draw the off-screen render node on the canvas of the display screen, the Render Thread performs background blur processing on the off-screen render node.

It may be understood that when the Gallery application sets the blur parameter of the off-screen render node, after the Gallery application transmits the property information of the off-screen render node to the system library by using the framework layer, the property information of the off-screen render node received by the system library includes the blur parameter. After the system library generates the blur filter based on the blur parameter of the off-screen render node, the Render Thread determines that the property information of the off-screen render node includes the blur filter and/or the blur parameter.

In this embodiment of this application, the Render Thread determines that the off-screen render node is a drawing node to be processed through background blur, and the Render Thread stores the location information of the off-screen render node in the property information of the off-screen render node.

In some embodiments, the Render Thread determines that the plurality of mutually unoccluded child nodes of the off-screen render node are drawing nodes to be processed through background blur, and the Render Thread stores location information of the plurality of mutually unoccluded child nodes of the off-screen render node relative to the off-screen render node and pointer locations of the child nodes in property information of a parent node corresponding to the child nodes, that is, in the property information of the off-screen render node.

When the Render Thread traverses to a specific off-screen render node and determines that background blur needs to be performed on the off-screen render node and child nodes thereof, the Render Thread may store location information of the off-screen render node, pointer locations of the child nodes thereof, and location information of the child nodes relative to the off-screen render node in property information of the drawing node.

It may be understood that in a process in which the Render Thread traverses the off-screen render nodes, after the Render Thread determines an off-screen render node to be processed through background blur, the Render Thread stores, in property information of the off-screen render node, location information of the off-screen render node to be processed through background blur. In this way, in a subsequent drawing process, blur processing may be simultaneously performed, based on the location information in the property information, on background regions corresponding to all off-screen render nodes to be subjected to blur processing, thereby saving time for performing background blur processing on the plurality of off-screen render nodes, and improving efficiency of background blur processing.

Herein, for a process in which the Render Thread determines whether the plurality of mutually unoccluded child nodes of the off-screen render node are drawing nodes to be processed through background blur, refer to the foregoing process of determining whether the off-screen render node is a drawing node to be processed through background blur. Details are not described herein again.

For example, still as shown in FIG. 5A, the Render Thread determines that nodes corresponding to the control 501 and the control 502 are mutually unoccluded child nodes, the Render Thread determines that the nodes corresponding to the control 501 and the control 502 are child nodes to be processed through background blur, and the Render Thread stores location information of both the control 501 and the control 502 in property information of a corresponding parent node.

S712: Traverse the drawing nodes of the to-be-displayed target interface to traverse to the first drawing node.

S713: Determine whether off-screen rendering is performed on the first drawing node.

S714: Determine whether the first drawing node requires background blur.

When the Render Thread draws the interface controls of the target interface on a canvas corresponding to the target interface, the Render Thread successively traverses the drawing nodes of the target interface based on the node tree structure of the drawing nodes of the target interface.

It should be explained that because all the off-screen render nodes in the off-screen render node queue and a node and child nodes thereof that are to be subjected to background blur in the off-screen render nodes are already determined in the process in which the Render Thread traverses the drawing nodes in the target interface, the Render Thread stores pointer locations of the child nodes to be processed through background blur and location information of the child nodes relative to the parent node in property information of the parent node. When the Render Thread traverses the drawing nodes of the target interface, the Render Thread needs to traverse only parent nodes of the target interface and does not need to traverse child nodes of the drawing nodes.

After the Render Thread traverses to the first drawing node to be subjected to background blur, background blur processing may be performed on the first drawing node and the child nodes based on the pointer locations of the child nodes and the location information of the child nodes relative to the first drawing node that are stored in the property information of the first drawing node. Herein, background blur processing is simultaneously performed on the first drawing node and the child nodes thereof, thereby improving efficiency of background blur processing, and reducing power consumption of the system.

Herein, how to draw content of a traversed drawing node is described by using an example in which the Render Thread traverses to the first drawing node.

After the Render Thread traverses to the first drawing node, the Render Thread determines whether off-screen rendering is performed on the first drawing node and whether background blur is required.

Herein, the Render Thread may simultaneously determine whether off-screen rendering is performed on the first drawing node and whether background blur is required, or the Render Thread may first determine whether off-screen rendering is performed on the first drawing node and then determine whether the first drawing node requires background blur, or the Render Thread may first determine whether the first drawing node requires background blur and then determine whether off-screen rendering is performed on the first drawing node. That is, an execution sequence of step S713 and step S714 is not limited in this embodiment of this application.

In an embodiment, if the Render Thread determines that off-screen rendering is performed on the first drawing node, and background blur processing needs to be performed on the first drawing node, step S715 is performed.

In another embodiment, if the Render Thread determines that off-screen rendering is performed on the first drawing node and there is no need to perform background blur processing on the first drawing node, the Render Thread may draw the off-screen picture corresponding to the first drawing node, that is, directly draw the off-screen picture of the first drawing node on a main canvas. Therefore, because off-screen rendering is performed on the content of the first drawing node, when the content of the first drawing node is drawn on the main canvas, there is no need to invoke a drawing instruction to redraw the first drawing node, thereby improving drawing efficiency of the target interface, and reducing power consumption of the system.

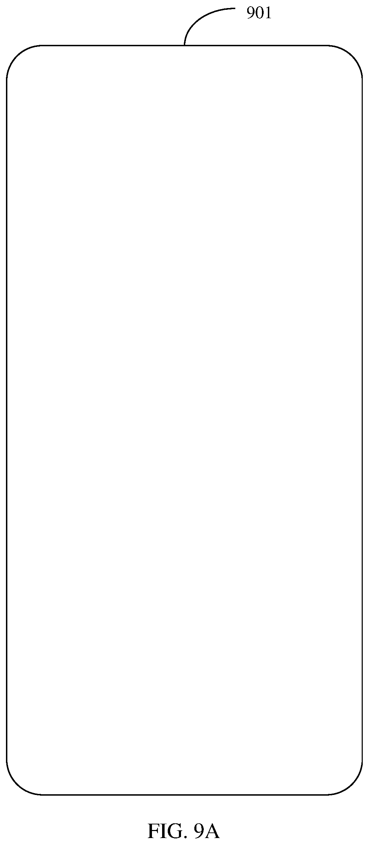

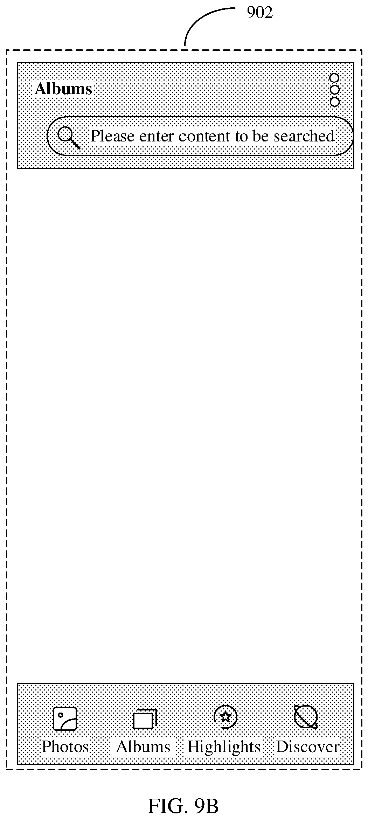

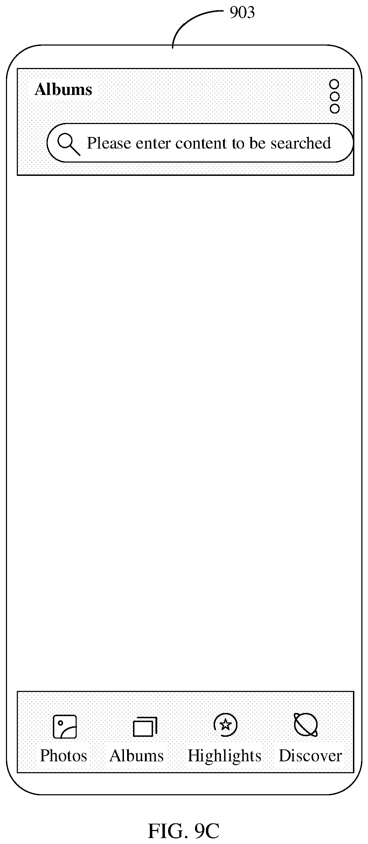

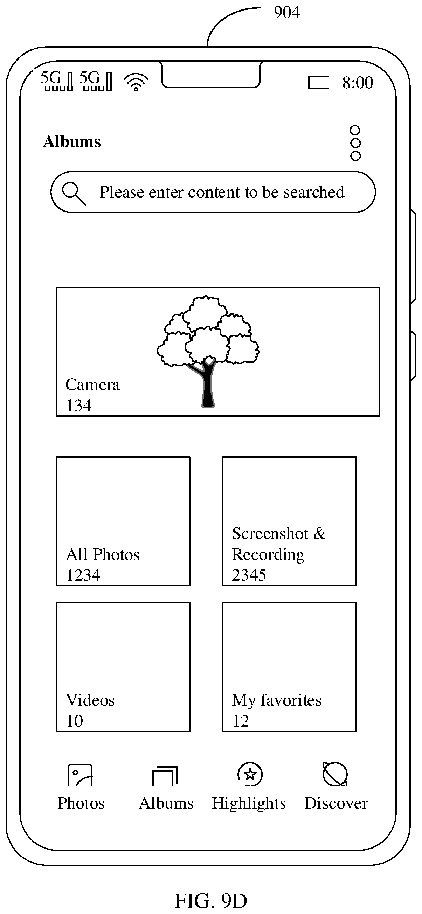

For example, as shown in FIG. 9A, FIG. 9B, FIG. 9C, and FIG. 9D, if the Render Thread determines that off-screen rendering is performed on the drawing node in the to-be-displayed interface and there is no need to perform background blur processing on the drawing node in the to-be-display interface, the Render Thread directly draws, on a canvas 901, an off-screen picture 902 on which off-screen rendering is performed in advance, to obtain drawn content 903. Then, the Render Thread repeatedly traverses all nodes, and draws display content of the to-be-displayed interface on the drawn content 903, to obtain a to-be-displayed interface 904.

In yet another embodiment, if the Render Thread determines that off-screen rendering is not performed on the first drawing node but background blur processing needs to be performed on the first drawing node, after the Render Thread performs background blur processing on a background region corresponding to the first drawing node by using a background blur algorithm, the Render Thread draws the content of the first drawing node on a layer above the background region obtained after blur processing. Herein, a specific implementation in which the Render Thread performs background blur processing on the background region corresponding to the first drawing node by using the background blur algorithm is described in detail subsequently. Details are not described herein.

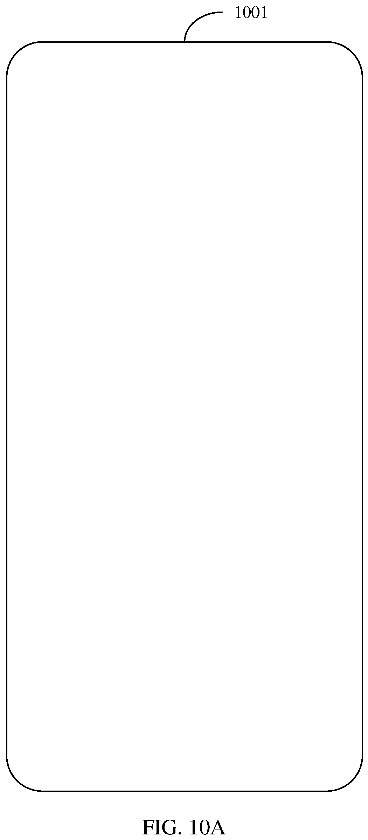

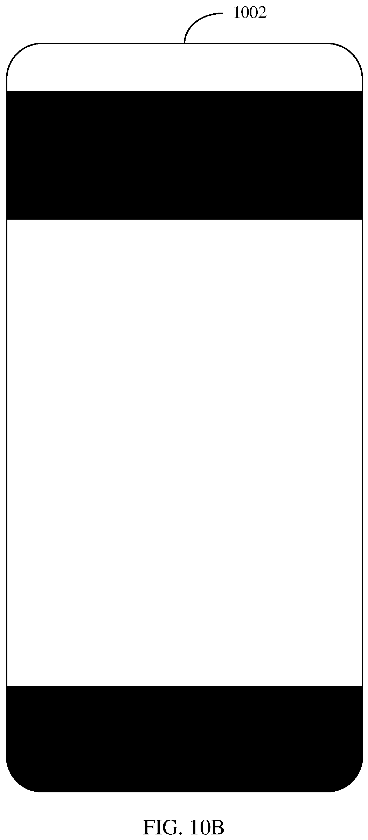

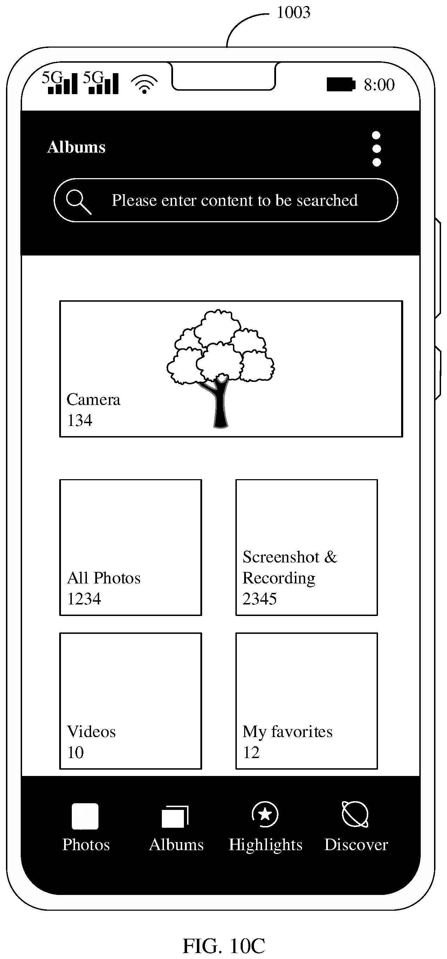

For example, as shown in FIG. 10A, FIG. 10B, and FIG. 10C, it is assumed that the Render Thread determines that off-screen rendering is performed on none of the drawing nodes in the to-be-displayed interface. When traversing to the drawing nodes, the Render Thread determines whether the drawing nodes require background blur. After the Render Thread determines region and shape information corresponding to a drawing node requiring background blur, the Render Thread draws a blurred picture on a canvas. As shown in FIG. 10A, FIG. 10B, and FIG. 10C, a blurred picture is drawn on a canvas 1001 to obtain a canvas 1002 on which the blurred picture is drawn. Then, the Render Thread draws the content of the to-be-displayed interface on a layer above the blurred picture to obtain a to-be-displayed interface 1003.

In yet another embodiment, if the Render Thread determines that off-screen rendering is not performed on the first drawing node but background blur processing needs to be performed on the first drawing node and the plurality of mutually unoccluded child nodes thereof, after the Render Thread uses a background blur algorithm to perform background blur processing on locations corresponding to the first drawing node and the plurality of child nodes thereof to obtain a blurred picture, the Render Thread draws the content of the first drawing node and the plurality of child nodes thereof on a layer above the blurred picture. Herein, the Render Thread uses the background blur algorithm to simultaneously perform background blur on the locations corresponding to the first drawing node and the plurality of child nodes thereof, thereby improving efficiency of background blur, and reducing power consumption of background blur. In yet another embodiment, if the Render Thread determines that off-screen rendering is not performed on the first drawing node and there is no need to perform background blur processing on the first drawing node, the Render Thread normally draws the content of the first drawing node on the canvas.

Herein, for a specific method of determining, by the Render Thread, whether the off-screen render node requires background blur, refer to the process of determining whether the off-screen render node requires background blur in step S714. Details are not described herein again.

S715: Perform background blur processing on a background region corresponding to a location of the first drawing node, and draw an off-screen picture on a layer above the background region obtained after blur processing.

If the Render Thread determines that off-screen rendering is performed on the first drawing node and background blur processing needs to be performed on the first drawing node, the Render Thread may use the blur parameter stored in the property information of the first drawing node to perform background blur processing on the background region corresponding to the location of the first drawing node on the canvas of the display screen, and draws, on the layer above the background region obtained after blur processing, the off-screen picture corresponding to the first drawing node on which off-screen rendering is performed in advance, that is, drawing of the first drawing node may be completed. Then, the Render Thread continues to traverse other drawing nodes in the to-be-displayed interface, to draw content of other drawing nodes of the Gallery application on the canvas, until all the drawing nodes are drawn on the canvas.

The following describes a process in which the Render Thread performs background blur processing on the background region corresponding to the location of the first drawing node. In this embodiment of this application, when the Render Thread performs background blur on the first drawing node by using a background picture in a storage address indicated by a picture identifier stored in the property information of the first drawing node, the Render Thread first determines whether to perform blur processing on the background picture based on the blur parameter included in the property information of the first drawing node.

Optionally, the Render Thread may determine, based on whether the background picture received by the system library is a picture transmitted from the Gallery application for the first time, whether to perform blur processing on the background picture.

In this embodiment of this application, after the Gallery application sends the picture identifier of the background picture to the framework layer, the framework layer sends the picture identifier of the background picture to the system library through the JNI interface. If the Render Thread determines that the system library receives the picture identifier of the background picture through the JNI interface for the first time, the Render Thread sets a flag bit to a first preset value. The Render Thread sets the flag bit to a second preset value after performing blur processing on the background picture.

For example, the Render Thread determines that the system library receives the picture identifier of the background picture through the JNI interface for the first time, and the Render Thread may set the flag bit to 0. The Render Thread sets the flag bit to 1 after performing blur processing on the background picture. A value of the flag bit is used to characterize whether the picture identifier of the background picture is received by the system library for the first time.

It should be explained that setting the flag bit to 0 or 1 by the Render Thread is merely an example for description. This is not limited in this embodiment of this application. For example, the Render Thread may set the flag bit to TRUE when the Render Thread determines that the system library receives the picture identifier of the background picture through the JNI interface for the first time; and the Render Thread may set the flag bit to FALSE after the Render Thread performs blur processing on the background picture.

In a possible case, if the Render Thread determines that the value of the flag bit is the first preset value, the Render Thread determines that the JNI interface receives the picture identifier of the background picture for the first time. That is, the Render Thread determines that the background picture has not been used to perform background blur processing on the first drawing node. In this case, the Render Thread determines to use the blur parameter included in the property information of the first drawing node to perform blur processing on the background picture.

In another possible case, if the Render Thread determines that the value of the flag bit is the second preset value, the Render Thread determines that the picture identifier of the background picture is not transmitted from the Gallery application for the first time, that is, the Render Thread has used the background picture to perform background blur processing on the first drawing node. That is, the background picture is a picture obtained after blur processing.

In this embodiment of this application, when the Render Thread determines that the background picture is a picture obtained after blur processing, the Render Thread may determine whether the background picture is a picture processed based on the blur parameter of the first drawing node, to determine, based on a determining result, whether to use the blur parameter of the first drawing node to perform blur processing on the background picture.

In a possible implementation, the Render Thread may obtain the blur parameter from the property information of the first drawing node, to determine whether the blur parameter used for blur processing of the background picture is the same as the blur parameter of the first drawing node, to determine whether to perform blur processing on the background picture again.

In this embodiment of this application, after the Render Thread determines that the background picture is a picture obtained after blur processing, the Render Thread obtains the blur parameter included in the property information of the first drawing node. If the Render Thread determines that the blur parameter corresponding to the first drawing node is the same as the blur parameter used for blur processing of the background picture, the Render Thread determines that there is no need to use the blur parameter of the first drawing node to perform blur processing on the background picture. If the Render Thread determines that the blur parameter corresponding to the first drawing node is different from the blur parameter used for blur processing of the background picture, the Render Thread determines that blur parameter of the first drawing node changes. In this case, the Render Thread determines to use the blur parameter corresponding to the first drawing node to perform blur processing on the background picture.

In this embodiment of this application, when the Render Thread uses the blur parameter corresponding to the first drawing node to perform blur processing on the background picture, the Render Thread sends the rendering instruction to the graphics processing unit, and the graphics processing unit performs blur processing on the background picture by using the blur filter in the property information of the first drawing node to obtain a blurred background picture, and stores the blurred background picture.

Herein, the graphics processing unit may send the blurred background picture to the storage location of the background picture for storage, or may replace the background picture stored at the storage location with the blurred background picture, to save storage memory. This is not limited herein.

In a possible case of this embodiment of this application, when the Render Thread determines that the background picture is a picture obtained after blur processing and there is no need to perform blur processing on the background picture, the Render Thread may crop the background region corresponding to the location of the first drawing node from the background picture. Then, the Render Thread draws the background region as a background to the location corresponding to the first drawing node on the canvas, to use the first background region as a background of the first drawing node, thereby implementing background blur processing on the first drawing node.

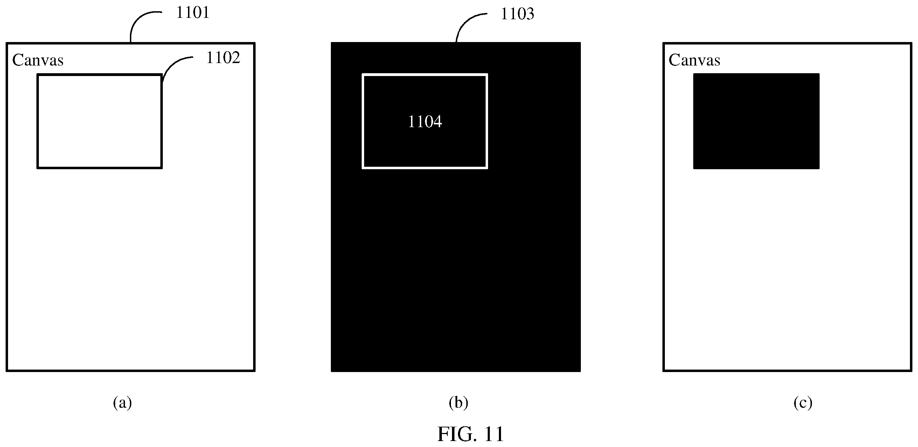

For example, as shown in FIG. 11, it is assumed that (a) of FIG. 11 shows a canvas 1101 of a display screen, and (b) of FIG. 11 is a background picture 1103. The Render Thread determines that a location of a specific drawing node on the canvas is a region 1102 in (a) of FIG. 11, and the Render Thread crops a background region 1104 at a same location as that of the region 1102 in (a) of FIG. 11 from the background picture 1103 in (b) of FIG. 11. Then, the Render Thread uses the background region 1104 to perform background blur processing on the drawing node, that is, the Render Thread crops the background region 1104 from the background picture 1103, and draws the background region 1104 as a background of the drawing node on the canvas 1101 of the display screen. After the Render Thread performs background blur processing on the drawing node, a display effect on the canvas of the display screen is shown in (c) of FIG. 11.

In another possible case of this embodiment of this application, the Render Thread determines that blur processing is not performed on the background picture or the blur parameter used for blur processing of the background picture is different from the blur parameter of the first drawing node, and the Render Thread determines to use the blur parameter of the first drawing node to perform blur processing on the background picture. After the Render Thread uses the blur parameter of the first drawing node to perform blur processing on the background picture to obtain the blurred background picture, the Render Thread may crop the background region corresponding to the location of the first drawing node from the background picture. Then, the Render Thread draws the background region as the background to the location corresponding to the first drawing node on the canvas, to use the background region as a background of the first drawing node, thereby implementing background blur processing on the first drawing node.

In this embodiment of this application, when the Render Thread determines that the first drawing node is a node to be processed through background blur, the Render Thread determines, based on whether the property information of the first drawing node stores the pointer locations of the child nodes thereof and the location information of the child nodes relative to the first drawing node, the child nodes that correspond to the first drawing node and that are to be processed through background blur. Then, the Render Thread crops, from the background picture, background regions respectively corresponding to the location of the first drawing node and the location information of the child nodes to be processed through background blur, to obtain a blurred picture. Then, after the Render Thread draws the blurred picture to locations corresponding to the first drawing node and the child nodes thereof on the canvas, the Render Thread draws, on a layer above the blurred picture, the off-screen picture of the first drawing node on which off-screen rendering is performed in advance, to complete drawing of the first drawing node. Then, the Render Thread continues to traverse other drawing nodes of the to-be-displayed target interface, to draw other drawing nodes on the canvas, until all the drawing nodes are drawn on the canvas.

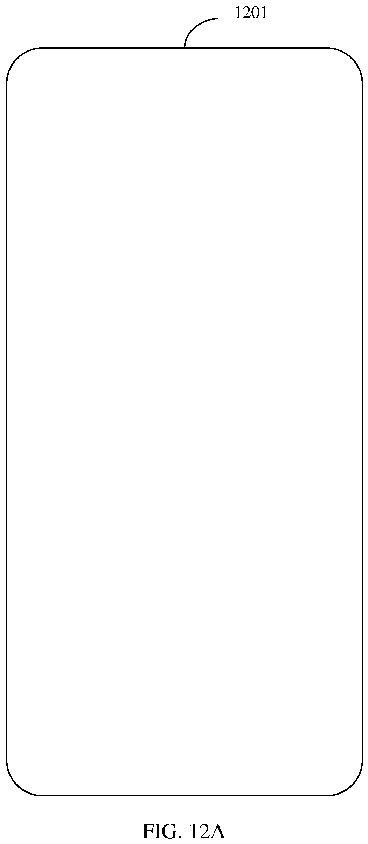

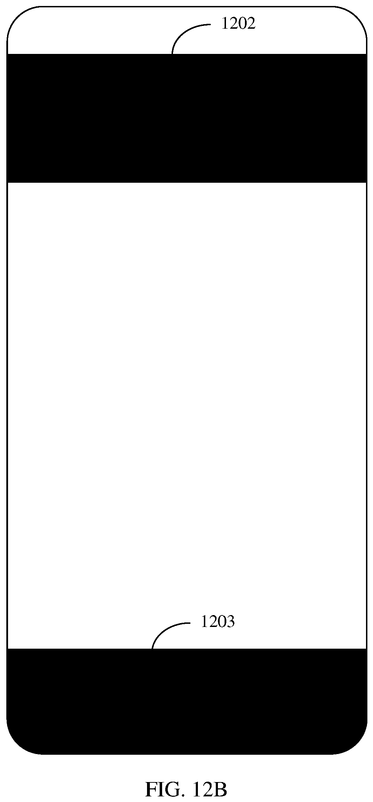

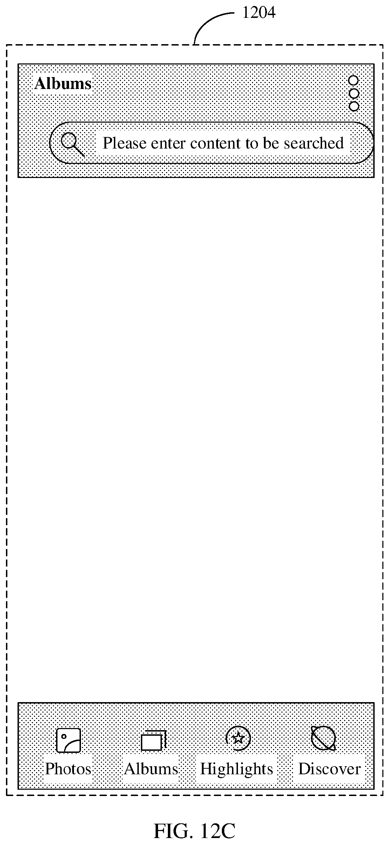

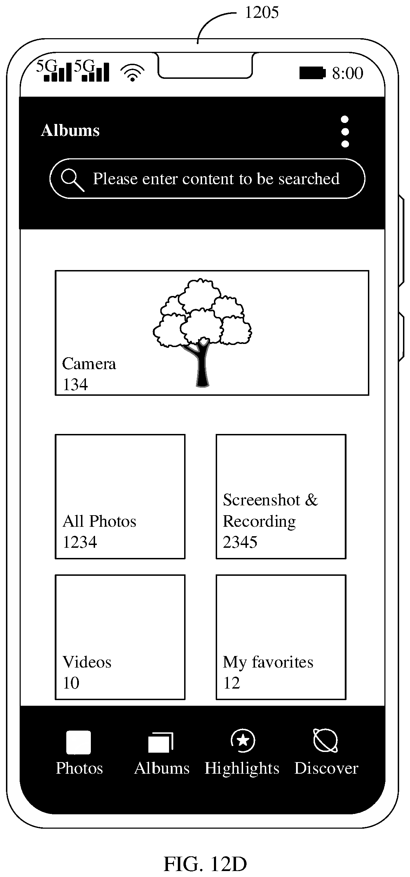

For example, as shown in FIG. 12A, FIG. 12B, FIG. 12C, and FIG. 12D, after the Render Thread crops, from the background picture, backgrounds of background regions respectively corresponding to a location of an off-screen render node 1 and locations of child nodes thereof that are to be processed through background blur as well as a location of an off-screen render node 2 and locations of child nodes thereof that are to be processed through background blur, and after the Render Thread draws, to regions 1202 and 1203 corresponding to drawing nodes on a canvas 1201, the backgrounds of the background regions respectively corresponding to the locations of the off-screen render node 1 and the child nodes thereof as well as the off-screen render node 2 and the child nodes thereof, the Render Thread draws, on a layer above the background regions, an off-screen picture 1204 that is of the off-screen render node 1 and the off-screen render node 2 and on which off-screen rendering is performed in advance, and continues to traverse other drawing nodes in the to-be-displayed target interface, so that the other drawing nodes of the Gallery application are drawn on the canvas, until all the drawing nodes are drawn on the canvas to obtain a to-be-displayed interface 1205 in FIG. 12D.

In a possible case of this embodiment of this application, when the pre-drawn off-screen picture includes the interface controls corresponding to all the off-screen render nodes and the child nodes thereof, the Render Thread may draw the off-screen picture on the layer above the blurred picture after drawing a blurred picture of an off-screen render node to be subjected to blur processing in all the off-screen render nodes to a corresponding location, that is, may complete drawing of the entire target interface.

When the to-be-displayed target interface of the Gallery application is drawn in practical, the Render Thread first draws an entire background picture of the to-be-displayed target interface on the canvas, the Render Thread then draws the background regions as the backgrounds of the drawing nodes to the locations corresponding to the drawing nodes on the canvas, and then draws the off-screen picture of the drawing nodes on the layer above the background regions. FIG. 12A, FIG. 12B, FIG. 12C, and FIG. 12D do not show a process of drawing the entire background picture of the to-be-displayed target interface on the canvas.

In this embodiment of this application, after the Render Thread determines that all the drawing nodes in the to-be-displayed target interface of the Gallery application are drawn on the canvas of the display screen, the Render Thread sends a Vsync signal to a Surface Flinger function. After receiving the Vsync signal, the Surface Flinger function composites the background picture of the to-be-displayed target interface, the layer of the drawing nodes and corresponding background regions, and the off-screen picture corresponding to the off-screen render nodes, and sends a composited image to the display screen for display, thereby displaying the target interface of the Gallery application.

For example, the Surface Flinger function may invoke a message processing function handleMessageRefresh to implement a process of compositing the image and displaying the composited image on the display screen.

In conclusion, in this embodiment of this application, in a scenario in which the interface controls and the background of the to-be-drawn target interface change infrequently, the Render Thread may perform off-screen rendering and drawing on the interface controls that change infrequently to obtain the off-screen picture. Each time the Render Thread draws the target interface, the Render Thread directly draws the off-screen picture on the main canvas without redrawing a constant interface control, thereby reducing executed drawing instructions, reducing power consumption of the device, and improving performance of the device.

In addition, the Render Thread may simultaneously perform background blur processing on the drawing nodes and the child nodes thereof that are to be processed through background blur in the to-be-drawn target interface to obtain the blurred picture. It can be learned that the Render Thread simultaneously performs background blur processing on a plurality of drawing nodes, thereby improving efficiency of background blur, and reducing power consumption of the device.

In a process of performing background blur on the drawing node to be processed through background blur, the Render Thread may directly crop, from the background picture stored in the property information of the drawing node, the background region as the background of the drawing node, without obtaining the background picture each time a drawing node is drawn, and performs blur processing on the obtained background picture, thereby reducing a quantity of times of obtaining the background picture, reducing a quantity of times of performing blur processing on the background picture, and effectively reducing power consumption of the device.

Alternatively, the Render Thread determines that blur processing is not performed, based on the blur parameter of the drawing node, on the background picture stored in the property information of the drawing node, and the Render Thread may perform blur processing on the background picture stored in the property information of the drawing node based on the blur parameter in the property information of the drawing node, and crops, from the blurred background picture obtained after blur processing, the background region as the background of the drawing node. It can be learned that the Render Thread does not need to obtain the background picture from the application layer again, thereby saving time for obtaining the background picture, and reducing power consumption of the device.

It may be understood that, to implement the foregoing functions, the electronic device includes corresponding hardware structures and/or software modules for executing the functions. A person skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the electronic device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that division of the modules in the embodiments of this application is an example, and is merely logical function division. During practical implementation, there may be another division manner.

When the functional modules are obtained through division based on the corresponding functions, according to a schematic diagram of possible composition of the electronic device in the foregoing embodiment, the electronic device may include: a display unit, a transmission unit, a processing unit, and the like. It should be noted that all related content of the steps in the foregoing method embodiment may be cited to function description of corresponding functional modules. Details are not described herein again.

An embodiment of this application further provides an electronic device, including one or more processors and one or more memories. The one or more memories are coupled to the one or more processors, the one or more memories are configured to store computer program code, and the computer program code includes computer instructions. When the one or more processors execute the computer instructions, the electronic device is enabled to perform the foregoing related method steps to implement the interface display method in the foregoing embodiment.

An embodiment of this application further provides a computer-readable storage medium. The computer-readable storage medium stores computer instructions, and when the computer instructions are run on an electronic device, the electronic device is enabled to perform the foregoing related method steps to implement the interface display method in the foregoing embodiment.

An embodiment of this application further provides a computer program product. The computer program product includes computer instructions. When the computer instructions are run on an electronic device, the electronic device is enabled to perform the foregoing related method steps to implement the interface display method in the foregoing embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the interface display method performed by the electronic device in the foregoing method embodiment.

The electronic device, the computer-readable storage medium, the computer program product, or the apparatus provided in the embodiments is configured to perform the corresponding method provided above. Therefore, for beneficial effects that can be achieved by the electronic device, the computer-readable storage medium, the computer program product, or the apparatus, refer to the beneficial effects of the corresponding method provided above. Details are not described herein again.

Through the descriptions of the foregoing implementations, a person skilled in the art may clearly understand that, for the purpose of convenient and brief description, only division of the foregoing functional modules is used as an example for description. In practical application, the functions may be allocated to and completed by different functional modules as required. In other words, an internal structure of the apparatus is divided into different functional modules, to complete all or some of the functions described above. For specific working processes of the system, apparatus, and unit described above, refer to corresponding processes in the foregoing method embodiment. Details are not described herein again.

In the embodiments of this application, functional units in the embodiments may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the method described in the embodiments of this application. The storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. An interface display method, wherein the method comprises:
determining a to-be-drawn first drawing node in a to-be-displayed target interface as a target drawing node, wherein the target drawing node means that a drawing node and a plurality of mutually unoccluded child nodes of the drawing node are all drawing nodes to be processed through background blur;
if it is determined that a stored background picture exists, and the background picture is a picture obtained after blur processing performed based on blur parameters respectively corresponding to the first drawing node and the plurality of child nodes, cropping background regions respectively corresponding to locations of the first drawing node and the plurality of child nodes from the background picture, to obtain a blurred picture;
after the blurred picture is drawn to corresponding locations of the first drawing node and the plurality of child nodes, drawing content of the first drawing node and the plurality of child nodes on a layer above the blurred picture, to generate the target interface; and
displaying the target interface, wherein the target interface comprises an interface control corresponding to the first drawing node and the plurality of child nodes, and a background region of the interface control is the blurred picture.

2. The method according to claim 1, wherein the drawing content of the first drawing node and the plurality of child nodes on a layer above the blurred picture, to generate the target interface comprises:
determining whether the first drawing node and the plurality of child nodes are all off-screen render nodes; and
if the first drawing node and the plurality of child nodes are all off-screen render nodes, drawing an off-screen picture on the layer above the blurred picture to generate the target interface, wherein the off-screen picture is obtained by performing off-screen drawing on the content of the first drawing node and the child nodes in advance, and the off-screen picture is drawn when the target interface is drawn for the first time or when the content of the off-screen render nodes in the target interface are updated.

3. The method according to claim 2, wherein before the drawing an off-screen picture on the layer above the blurred picture to generate the target interface, the method further comprises:
traversing to the first drawing node of the target interface, and determining, based on whether property information of the first drawing node comprises an off-screen render identifier, whether the first drawing node and the plurality of child nodes are all off-screen render nodes; and
if the first drawing node and the plurality of child nodes are off-screen render nodes, drawing the content of the first drawing node and the plurality of child nodes on a corresponding off-screen canvas, to generate a corresponding off-screen picture.

4. The method according to any one of claims 1-3, wherein the method further comprises:
determining whether the first drawing node and the plurality of child nodes are drawing nodes to be processed through background blur; and
if only the first drawing node is a drawing node to be processed through background blur, storing location information of the first drawing node in the property information of the drawing node; or
if the first drawing node and the plurality of child nodes are all drawing nodes to be processed through background blur, storing location information of the first drawing node and the plurality of child nodes in the property information of the target drawing node; and
that the blurred picture is drawn to corresponding locations of the first drawing node and the plurality of child nodes comprises:
drawing the blurred picture to the corresponding locations of the first drawing node and the plurality of child nodes based on the location information of the first drawing node and the plurality of child nodes that is stored in the property information.

5. The method according to any one of claims 1-4, wherein the property information of the first drawing node stores the blur parameters respectively corresponding to the first drawing node and the plurality of child nodes, the blur parameter comprises a blur radius, and the method further comprises:
if it is determined that the stored background picture exists, and blur processing is not performed on the background picture based on the blur parameters respectively corresponding to the first drawing node and the plurality of child nodes, generating corresponding blur filters based on blur radiuses respectively corresponding to the target drawing node and the plurality of child nodes, wherein the blur radius is used to characterize a blur degree of the background picture;
performing blur processing on the locations corresponding to the first drawing node and the plurality of child nodes in the background picture by using the blur filters respectively corresponding to the target drawing node and the plurality of child nodes, to obtain the background picture after blur processing; and
cropping the background regions respectively corresponding to the location information of the first drawing node and the plurality of child nodes from the background picture obtained after blur processing, to obtain the blurred picture.

6. The method according to claim 4 or 5, wherein the location information of the child nodes is locations of the child nodes relative to the first drawing node.

7. The method according to any one of claims 1-6, wherein the method is applied to an electronic device, the electronic device comprises an application layer, a framework layer, and a system library, the application layer comprises a target application, and the method further comprises:
after the electronic device obtains the blur parameter and the off-screen render identifier of the first drawing node based on the target application at the application layer, sending, by the target application, the blur parameter and the off-screen render identifier to a corresponding first drawing node at the framework layer;
sending, by the first drawing node at the framework layer, the blur parameter and the off-screen render identifier to a corresponding first drawing node in the system library; and
after the first drawing node in the system library receives the blur parameter and the off-screen render identifier, storing the blur parameter and the off-screen render identifier in corresponding property information.

8. An electronic device, comprising:
one or more processors; and
a memory, wherein
the memory stores one or more computer programs, the one or more computer programs comprise instructions, and when the instructions are executed by the electronic device, the electronic device is enabled to perform the interface display method according to any one of claims 1-7.

9. A computer-readable storage medium, wherein the computer-readable storage medium stores instructions, and when the instructions are run on an electronic device, the electronic device is enabled to perform the interface display method according to any one of claims 1-7.
